# EUROPEAN PATENT SPECIFICATION

(11) **EP 2 411 214 B1**
(45) Date of publication and mention of the grant of the patent: **05.11.2014**
(21) Application number: 10756751.3
(22) Date of filing: 24.03.2010
(51) Int. Cl.: C08J 5/18, C08K 5/00, C08L 23/10

(54) **POLYOLEFIN FILMS FOR IN-MOLD LABELS**
POLYOLEFINFILME FÜR ETIKETTEN INNERHALB VON GUSSFORMEN
FILMS DE POLYOLÉFINE POUR ÉTIQUETTES POUR ÉTIQUETAGE AU MOULAGE

(30) Priority: 26.03.2009 US 411887
(43) Date of publication of application: 01.02.2012
(73) Proprietor: Fina Technology, Inc., Houston, TX 77267-4412 (US)
(72) Inventor: TURNER, David, Pasadena TX 77505 (US); MILLER, Mark, Houston TX 77062-2319 (US)
(74) Representative: Dennemeyer & Associates S.A.
(86) International application number: PCT/US2010/028412
(87) International publication number: WO 2010/111332

(56) References cited:
- EP-A1- 2 159 253
- WO-A1-2005/066247
- US-A1- 2006 024 520
- US-A1- 2007 003 777
- US-A1- 2007 100 053
- US-A1- 2008 061 468
- US-A1- 2008 161 515
- US-B1- 6 476 172

## Description

### FIELD

Embodiments of the present invention generally relate to polyolefin films for use in in-mold labeling applications. Specifically, the present invention relates to polypropylene cast films for use in in-mold labeling.

### BACKGROUND

In-mold labels have mostly been produced from biaxially-oriented polypropylene (BOPP) or from machine direction oriented (MDO) films. It has been observed that cast films used in in-mold labeling applications require stiffness and clarity. Furthermore, the films must be easily die cut for ease of label preparation.

Therefore, a need exists to develop polypropylene resin that can be converted into a cast film that has adequate stiffness and clarity for use in in-mold labeling applications. Such film must also be easily die cut.
US 2006/024520 A1 describes a permeable, propylene-containing film structure including a core layer containing a propylene polymer matrix that has been cavitated by a two-component cavitation system, wherein the first component of the two-component cavitation system is a beta-nucleating agent to produce the beta-crystalline form of polypropylene and the second component is a filler.
EP 2 159 253 A1 relates to a cast or blown film wherein at least one layer comprises a metallocene-catalyzed propylene polymer and an alpha-nucleating agent.
WO 2005/066247 A1 describes a polypropylene resin composition which includes a random copolymer of propylene, at least one C₄-C₁₀ alpha-olefin, and ethylene, wherein the ratio of the weight percentage of ethylene in the polypropylene random copolymer relative to the sum of the weight percentages of the C₄-C₁₀ alpha-olefins is less than or equal to 1, and, from 10 to 20,000 ppm of at least one nucleating agent.

### SUMMARY

The present invention provides an in-mold label that comprises a cast film that comprises a polypropylene resin and a nucleator. The polypropylene resin has a melt flow rate from 2 dg/min. to 10 dg/min., a xylene solubles content less than 1 wt%, and meso pentad distribution greater than 98%., wherein the film has a 2% secant modulus of from 1030 to 1720 MPa (150 to 250 kpsi). The polypropylene resin may be visbroken.

The present invention further provides an injection molded package, a blow molded package and an injection stretch blow molded package, respectively, into which the inventive in-mold label is incorporated, as well as a process of producing the inventive in-mold label according having a step of producing the cast film wherein at least one casting roll has a set temperature of 96.1°C (205°F).

### DETAILED DESCRIPTION

### Introduction and Definitions

A detailed description will now be provided. Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions when the information in this patent is combined with available information and technology.

Various terms as used herein are shown below. To the extent a term used in a claim is not defined below, it should be given the broadest definition persons in the pertinent art have given that term as reflected in printed publications and issued patents. Further, unless otherwise specified, all compounds described herein may be substituted or unsubstituted and the listing of compounds includes derivatives thereof.

### Catalyst Systems

Catalyst systems useful for polymerizing olefin monomers include any catalyst system known to one skilled in the art. For example, the catalyst system may include metallocene catalyst systems, single site catalyst systems, Ziegler-Natta catalyst systems or combinations thereof, for example. As is known in the art, the catalysts may be activated for subsequent polymerization and may or may not be associated with a support material. A brief discussion of such catalyst systems is included below, but is in no way intended to limit the scope of the invention to such catalysts.

For example, Ziegler-Natta catalyst systems are generally formed from the combination of a metal component (*e.g*., a catalyst) with one or more additional components, such as a catalyst support, a cocatalyst and/or one or more electron donors, for example.

Metallocene catalysts may be characterized generally as coordination compounds incorporating one or more cyclopentadienyl (Cp) groups (which may be substituted or unsubstituted, each substitution being the same or different) coordinated with a transition metal through π bonding. The substituent groups on Cp may be linear, branched or cyclic hydrocarbyl radicals, for example. The cyclic hydrocarbyl radicals may further form other contiguous ring structures, including indenyl, azulenyl and fluorenyl groups, for example. These contiguous ring structures may also be substituted or unsubstituted by hydrocarbyl radicals, such as C₁ to C₂₀ hydrocarbyl radicals, for example.

### Polymerization Processes

As indicated elsewhere herein, catalyst systems are used to form polyolefin compositions. Once the catalyst system is prepared, as described above and/or as known to one skilled in the art, a variety of processes may be carried out using that composition. The equipment, process conditions, reactants, additives and other materials used in polymerization processes will vary in a given process, depending on the desired composition and properties of the polymer being formed. Such processes may include solution phase, gas phase, slurry phase, bulk phase, high pressure processes or combinations thereof, for example. (*See*, U.S. Patent No. 5,525,678; U.S. Patent No. 6,420,580; U.S. Patent No. 6,380,328; U.S. Patent No. 6,359,072; U.S. Patent No. 6,346,586; U.S. Patent No. 6,340,730; U.S. Patent No. 6,339,134; U.S. Patent No. 6,300,436; U.S. Patent No. 6,274,684; U.S. Patent No. 6,271,323; U.S. Patent No. 6,248,845; U.S. Patent No. 6,245,868; U.S. Patent No. 6,245,705; U.S. Patent No. 6,242,545; U.S. Patent No. 6,211,105; U.S. Patent No. 6,207,606; U.S. Patent No. 6,180,735 and U.S. Patent No. 6,147,173).

In certain embodiments, the processes described above generally include polymerizing one or more olefin monomers to form polymers. The olefin monomers may include C₂ to C₃₀ olefin monomers, or C₂ to C₁₂ olefin monomers (*e.g*., ethylene, propylene, butene, pentene, methylpentene, hexene, octene and decene), for example. The monomers may include ethylenically unsaturated monomers, C₄ to C₁₈ diolefins, conjugated or nonconjugated dienes, polyenes, vinyl monomers and cyclic olefins, for example. Non-limiting examples of other monomers may include norbornene, nobornadiene, isobutylene, isoprene, vinylbenzocyclobutane, sytrene, alkyl substituted styrene, ethylidene norbornene, dicyclopentadiene and cyclopentene, for example. The formed polymer may include homopolymers, copolymers or terpolymers, for example.

Examples of solution processes are described in U.S. Patent No. 4,271,060, U.S. Patent No. 5,001,205, U.S. Patent No. 5,236,998 and U.S. Patent No. 5,589,555.

One example of a gas phase polymerization process includes a continuous cycle system, wherein a cycling gas stream (otherwise known as a recycle stream or fluidizing medium) is heated in a reactor by heat of polymerization. The heat is removed from the cycling gas stream in another part of the cycle by a cooling system external to the reactor. The cycling gas stream containing one or more monomers may be continuously cycled through a fluidized bed in the presence of a catalyst under reactive conditions. The cycling gas stream is generally withdrawn from the fluidized bed and recycled back into the reactor. Simultaneously, polymer product may be withdrawn from the reactor and fresh monomer may be added to replace the polymerized monomer. The reactor pressure in a gas phase process may vary from about 100 psig to about 500 psig, or from about 200 psig to about 400 psig or from about 250 psig to about 350 psig, for example. The reactor temperature in a gas phase process may vary from about 30°C to about 120°C, or from about 60°C to about 115°C, or from about 70°C to about 110°C or from about 70°C to about 95°C, for example. (*See*, for example, U.S. Patent No. 4,543,399; U.S. Patent No. 4,588,790; U.S. Patent No. 5,028,670; U.S. Patent No. 5,317,036; U.S. Patent No. 5,352,749; U.S. Patent No. 5,405,922; U.S. Patent No. 5,436,304; U.S. Patent No. 5,456,471; U.S. Patent No. 5,462,999; U.S. Patent No. 5,616,661; U.S. Patent No. 5,627,242; U.S. Patent No. 5,665,818; U.S. Patent No. 5,677,375 and U.S. Patent No. 5,668,228).

Slurry phase processes generally include forming a suspension of solid, particulate polymer in a liquid polymerization medium, to which monomers and optionally hydrogen, along with catalyst, are added. The suspension (which may include diluents) may be intermittently or continuously removed from the reactor where the volatile components can be separated from the polymer and recycled, optionally after a distillation, to the reactor. The liquefied diluent employed in the polymerization medium may include a C₃ to C₇ alkane (*e.g*., hexane or isobutane), for example. The medium employed is generally liquid under the conditions of polymerization and relatively inert. A bulk phase process is similar to that of a slurry process with the exception that the liquid medium is also the reactant (*e.g.*, monomer) in a bulk phase process. However, a process may be a bulk process, a slurry process or a bulk slurry process, for example.

In a specific embodiment, a slurry process or a bulk process may be carried out continuously in one or more loop reactors. The catalyst, as slurry or as a dry free flowing powder, may be injected regularly to the reactor loop, which can itself be filled with circulating slurry of growing polymer particles in a diluent, for example. Optionally, hydrogen may be added to the process, such as for molecular weight control of the resultant polymer. The loop reactor may be maintained at a pressure of from about 27 bar to about 50 bar or from about 35 bar to about 45 bar and a temperature of from about 38°C to about 121°C, for example. Reaction heat may be removed through the loop wall via any method known to one skilled in the art, such as via a double-jacketed pipe or heat exchanger, for example. Alternatively, other types of polymerization processes may be used, such as stirred reactors in series, parallel or combinations thereof, for example.

### Polymer Product

Upon removal from the reactor, the polymer may be passed to a polymer recovery system for further processing, such as addition of additives and/or extrusion, for example.

The polymers (and blends thereof) formed via the processes described herein may include, but are not limited to, linear low density polyethylene, elastomers, plastomers, high density polyethylenes, low density polyethylenes, medium density polyethylenes, polypropylene and polypropylene copolymers, for example.

Unless otherwise designated herein, all testing methods are the current methods at the time of filing.

In one or more embodiments, the polymers include propylene based polymers. As used herein, the term "propylene based" is used interchangeably with the terms "propylene polymer" or "polypropylene" and refers to a polymer having at least about 50 wt.%, or at least about 70 wt.%, or at least about 75 wt.%, or at least about 80 wt.%, or at least about 85 wt.% or at least about 90 wt.% polypropylene relative to the total weight of polymer, for example.

The propylene based polymers may have a molecular weight distribution (Mₙ/M_{w}) of from about 1.0 to about 20, or from about 1.5 to about 15 or from about 2 to about 12, for example.

In one embodiment, the propylene polymer has a microtacticity of greater than 98%.

In one embodiment, propylene based polymers may have a recrystallization temperature (Tᵣ) of 110°C.

In one embodiment, propylene based polymers may have a molecular weight (M_{w}) of 160,000 (as measured by gel permeation chromatography).

The propylene based polymers may have a melting point (Tₘ) (as measured by DSC) of at least about 110°C, or from about 115°C to about 175°C, for example.

The propylene based polymers include less than 1 wt% of xylene soluble material (XS) (as measured by ASTM D5492-06).

The propylene based polymers have a melt flow rate (MFR) (as measured by ASTM D-1238) of from 2 dg/min. to 10 dg/min., or from 5 dg/min. to 8 dg/min. for example.

The polypropylene based polymers have a crystallinity based on the microtacticity of the polymer as measured by C¹³ NMR of greater than 98%, or greater than 99% meso pentads. The propylene based polymers may have a crystallinity, measured by DSC, of 50, or from 40 to 60, or from 45 to 55.

In one or more embodiments, the polymers include polypropylene homopolymers. Unless otherwise specified, the term "polypropylene homopolymer" refers to propylene homopolymers or those polymers composed primarily of propylene and amounts of other comonomers, wherein the amount of comonomer is insufficient to change the crystalline nature of the propylene polymer significantly.

In one or more embodiments, the polymers include propylene based random copolymers. Unless otherwise specified, the term "propylene based random copolymer" refers to those copolymers composed primarily of propylene and an amount of at least one comonomer, wherein the polymer includes at least about 0.5 wt.%, or at least about 0.8 wt.%, or at least about 2 wt.%, or from about 0.5 wt.% to about 5.0 wt.%, or from about 0.6 wt.% to about 1.0 wt.% comonomer relative to the total weight of polymer, for example. The comonomers may be selected from C₂ to C₁₀ alkenes. For example, the comonomers may be selected from ethylene, propylene, 1-butene, 1-pentene, 1-hexene, 1-heptene, 1-octene, 1-nonene, 1-decene, 4-methyl-1-pentene and combinations thereof. In one specific embodiment, the comonomer includes ethylene. Further, the term "random copolymer" refers to a copolymer formed of macromolecules in which the probability of finding a given monomeric unit at any given site in the chain is independent of the nature of the adjacent units.

The propylene based random copolymers may exhibit a melt flow rate of 2 to 10 dg./min.

In one or more embodiments, the propylene based polymers include stereospecific polymers. As used herein, the term "stereospecific polymer" refers to a polymer having a defined arrangement of molecules in space, such as isotactic and syndiotactic polypropylene, for example. The term "tacticity" refers to the arrangement of pendant groups in a polymer. For example, a polymer is "atactic" when its pendant groups are arranged in a random fashion on both sides of the chain of the polymer. In contrast, a polymer is "isotactic" when all of its pendant groups are arranged on the same side of the chain and "syndiotactic" when its pendant groups alternate on opposite sides of the chain.

In one or more embodiments, the polymers include syndiotactic polypropylene.

In one or more embodiments, the polymers include isotactic polypropylene. As used herein, the term "isotactic polypropylene" refers to polypropylene having a crystallinity measured by ¹³C NMR spectroscopy using meso pentads (*e.g*., %mmmm) of greater than 98%.

The isotactic polypropylene may have a melting point (Tₘ) (as measured by DSC) of from about 130°C to about 175°C, or from about 140°C to about 170°C or from about 150°C to about 165°C, for example. The isotactic polypropylene may have a molecular weight (M_{w}) (as measured by gel permeation chromatography) of from about 2,000 to about 1,000,000 or from about 100,000 to about 800,000, for example.

In one embodiment, additives may also be included in the final composition. Nucleators may include any nucleator known to one skilled in the art. For example, non-limiting examples of nucleators may include carboxylic acid salts, including sodium benzoate, talc, phosphates, metallic-silicate hydrates, norbornane carboxylic acid salts, organic derivatives of dibenzylidene sorbitol, sorbitol acetals, organophosphate salts and combinations thereof. In one embodiment, the nucleators are selected from Amfine Na-11 and Na-21, commercially available from Amfine Chemical, Milliken HPN-68, and Millad 3988, commercially available from Milliken Chemical.

In an embodiment, the nucleators may be used in concentrations of from about 0 to about 3000 ppm, or from about 5 ppm to about 1000 ppm or from about 10 ppm to about 500 ppm by weight of the polymer, for example.

The additives may contact the polymer by any method known to one skilled in the art. For example, the additives may contact the polymer prior to extrusion (within the polymerization process) or within the extruder, for example. In one embodiment, the additives contact the polymer independently. In another embodiment, the additives are contacted with one another prior to contacting the polymer. In one embodiment, the contact includes blending, such as mechanical blending, for example.

In one embodiment, the propylene based polymers may be visbroken. A polymer is visbroken when a chemical, such as peroxide, is added to the polymer powder during extrusion which causes copolymer chain breaking, therefore narrowing the molecular weight distribution and increasing the melt flow rate.

### Product Application

The polymers and blends thereof are useful in applications known to one skilled in the art, such as forming operations (*e.g*., film, sheet, pipe and fiber extrusion and co-extrusion as well as blow molding, injection molding and rotary molding). Films include blown or cast films formed by co-extrusion or by lamination useful as shrink film, cling film, stretch film, sealing films, oriented films, snack packaging, heavy duty bags, grocery sacks, baked and frozen food packaging, medical packaging, industrial liners, and membranes, for example, in food-contact and non-food contact application. Fibers include melt spinning, solution spinning and melt blown fiber operations for use in woven or non-woven form to make filters, diaper fabrics, medical garments and geotextiles, for example. Extruded articles include medical tubing, wire and cable coatings, geomembranes and pond liners, for example. Molded articles include single and multi-layered constructions in the form of bottles, tanks, large hollow articles, rigid food containers and toys, for example.

In particular, the polymers are useful for cast film applications. As used herein, cast films are non-oriented films in the sense that these films are not further oriented as with BOPP or MDO. In one example of a cast film process, a polymer is extruded out of a flat die face and cooled rapidly (typically on a chilled roll) to form a film with a thickness which can range from 10.2 µm to 381 µm (0.4 mil to 15 mil).

Additionally, the polymers are useful in cast films that may be used in in-mold labeling applications.

In mold labeling (IML) is a process for labeling a molded plastic object while the object is being formed in the mold. The applications range from automobile dashboards to liquid detergent bottles to ice cream cartons. IML usually refers to blow molded, injection molded, or thermoformed packaging.

In the IML process, a label or decorative applique is placed in the open mold and held in the desired position by vacuum ports, electrostatic attraction or other means. The mold closes and molten plastic resin is extruded or injected in to the mold where it conforms to the shape of the object as it cools. The hot plastic envelopes the label, making it an integral part of the molded object.

In one embodiment, the films produced may have haze properties of from 2% to 20%, or from 4% to 15%, or from 5% to 10%. In one embodiment, the films produced may have gloss at 45° of from 50% to 90%, or from 70% to 85%, or from 75% to 80%.

The films produced have a 2% secant modulus of from 1030 to 1720 MPa (150 kpsi to 250 kpsi), or from 1210 to 1380 MPa (175 kpsi to 200 kpsi). In one embodiment, the films produced may have tensile strength at yield of from 20.7 to 51.7 MPa (3000 psi to 7500 psi), or from 27.6 to 44.8 MPa (4000 psi to 6500 psi), or from 34.5 to 41.4 MPa (5000 psi to 6000 psi). In one embodiment, the films produced may have an elongation at yield of from 1% to 15%, or from 2% to 10%, or from 4% to 8%.

In one embodiment, the films produced may have tensile strength at break of from 6.89 to 345 kPa (1 psi to 50 psi), or from 34.5 to 172 kPa (5 psi to 25 psi), or from 68.9 to 103 kPa (10 psi to 15 psi). In one embodiment, the films produced may have an elongation at break of from 25% to 75%, or from 40% to 65%, or from 50% to 60%.

In one embodiment, the films produced may have a thickness of from 25.4 to 254 µm (1 mil to 10 mil), or from 76.2 to 203 µm (3 mil to 8 mil), or 127 µm (5 mil).

### Examples

The following test methods were used in evaluating the polymer and resulting end use products. Haze: ASTM D1003; Gloss: ASTM D-2457-70; Tensile Strength: ASTM D882; Elongation: ASTM D882; Secant Modulus: ASTM D882.

A series of cast film trials were conducted on a Davis Standard mini- cast film line. A summary of the film physical data is shown in Table 1.

The resin used was TOTAL Petrochemicals 3270 available from TOTAL Petrochemicals USA, Inc. Additionally, Control means 3270 without visbreaking or nucleator, CR'd means 3270 visbroken, and CR'd and Nucleated means 3270 visbroken with nucleators added.

**Table 1. Film Physical Data for In-Mold Label Films**

| | Control | CR'd | CR'd & Nucleated |
|---|---|---|---|
| Tensile Strgth @YLD MD (MPa) | 24.1 (3500 psi) | 35.2 (5103 psi) | 40.7 (5900 psi) |
| Tensile Strgth @Break MD (MPa) | 44.8 (6500 psi) | 31(4500 psi) | 0.0965 (14 psi) |
| Elongation @ Yld MD (%) | 6.3 | 5.9 | 4.9 |
| Elongation @ Break MD (%) | 690730 | 570 | 61.5 |
| Film Thickness (µm) | 58.4 (2.3 mil) | 66 (2.6 mil) | 76.2 (3 mil) |
| 2% Secant Modulus (MPa) | 6580 (955000 psi) | 1060 (154000 psi) | 1360 (197000 psi) |
| Haze (%) | 5.2 | 37 | 4.2 |
| Gloss @ 45 (%) | 74 | 34 | 80 |

As can be seen in Table 1, a cast film with the stiffness and clarity required for an in-mold label application was produced. In addition, a product with a minimum elongation to promote die cutting of the label stock was achieved. Film formed from the nucleated, controlled-rheology (visbroken), high crystallinity polypropylene exhibited increased stiffness (modulus) and low elongation. Optical properties as evidenced by the decrease in haze and increase in gloss was improved. The 3270 resin was visbroken to an 8 dg/min. melt flow rate. A high crystallinity resin with a similar melt flow rate, without the need for visbreaking, may also provide the desired end use physical properties for in-mold labeling.

Processing conditions for the cast film were also adjusted. The CR'd and Nucleated film was produced using a casting roll temperature of 96.1 °C (205°F).

While various embodiments have been shown and described, modifications thereof can be made by one skilled in the art without departing from the teachings of the disclosure. The embodiments described herein are exemplary only, and are not intended to be limiting. Many variations and modifications of the embodiments disclosed herein are possible and are within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

Accordingly, the scope of protection is not limited by the description set out above but is only limited by the claims which follow, that scope including all equivalents of the subject matter of the claims. Each and every claim is incorporated into the specification as an embodiment of the present disclosure. Thus, the claims are a further description and are an addition to the embodiments disclosed herein. The discussion of a reference herein is not an admission that it is prior art to the present disclosure, especially any reference that may have a publication date after the priority date of this application.

## Claims

1. An in-mold label comprising a cast film comprising a polypropylene resin and a nucleator, wherein said polypropylene resin has a melt flow rate from 2 dg/min. to 10 dg/min., a xylene solubles content less than 1 wt%, and meso pentad distribution greater than 98%, wherein the film has a 2% secant modulus of from 1030 to 1720 MPa (150 to 250 kpsi).

2. The in-mold label of claim 1 wherein the nucleator is selected from the group consisting of carboxylic acid salts, talc, phosphates, metallic-silicate hydrates, norbornane carboxylic acid salts, organic derivatives of dibenzylidene sorbitol, sorbitol acetals, organophosphate salts and combinations thereof.

3. The in-mold label of claim 2 wherein the nucleator is a norbornane carboxylic acid salt.

4. The in-mold label of claim 3 wherein the nucleator comprises 5 to 1000 ppm of the total composition of the polypropylene resin and nucleator.

5. The in-mold label of claim 1 wherein said polypropylene resin is visbroken.

6. The in-mold label of claim 1 wherein the film has a haze is from 2% to 8%.

7. The in-mold label of claim 1 wherein the film has a gloss at 45° of from 60% to 90%.

8. The in-mold label of claim 1 wherein the film has a thickness of from 50.8 µm to 203 µm (2 mil to 8 mil).

9. The in-mold label of claim 1 wherein the film has an elongation at yield of from 2% to 8%;
or the in-mold label of claim 1 wherein the film has a tensile strength at yield of from 31000 to 44800 MPa (4500 to 6500 psi).

10. An injection molded package into which the in-mold label of claim 1 is incorporated.

11. A blow molded package into which the in-mold label of claim 1 is incorporated.

12. An injection stretch blow molded package into which the in-mold label of claim 1 is incorporated.

13. A process of producing an in-mold label according to any of claims 1 to 9 having a step of producing the cast film wherein at least one casting roll has a set temperature of 96.1 °C (205°F).

## Patentansprüche

1. Blasformetikett, umfassend eine Gießfolie, die ein Polypropylenharz und einen Keimbildner umfasst, wobei das Polypropylenharz eine Schmelzflussrate von 2 dg/min bis 10 dg/min, einen Gehalt an xylenlöslichen Stoffen von weniger als 1 Gew.-% und eine Mesopentaden-Verteilung von über 98 % aufweist, wobei die Folie ein 2%-Sekantenmodul von 1030 bis 1720 MPa (150 bis 250 kpsi) aufweist.

2. Blasformetikett nach Anspruch 1, wobei der Keimbildner aus der Gruppe bestehend aus Carbonsäuresalzen, Talk, Phosphaten, Metallsilicathydraten, Norbornancarbonsäuresalzen, organischen Derivaten von Dibenzylidensorbitol, Sorbitolacetalen, Organophosphatsalzen und Kombinationen davon ausgewählt ist.

3. Blasformetikett nach Anspruch 2, wobei der Keimbildner ein Norbornancarbonsäuresalz ist.

4. Blasformetikett nach Anspruch 3, wobei der Keimbildner 5 bis 1000 ppm der Gesamtzusammensetzung des Polypropylenharzes und des Keimbildners umfasst.

5. Blasformetikett nach Anspruch 1, wobei das Polypropylenharz viskositätsgebrochen ist.

6. Blasformetikett nach Anspruch 1, wobei die Folie eine Trübung aufweist, die 2 % bis 8 % beträgt.

7. Blasformetikett nach Anspruch 1, wobei die Folie einen Glanz bei 45° von 60 % bis 90 % aufweist.

8. Blasformetikett nach Anspruch 1, wobei die Folie eine Dicke von 50,8 µm bis 203 µm (2 mil bis 8 mil) aufweist.

9. Blasformetikett nach Anspruch 1, wobei die Folie eine Streckdehnung von 2 % bis 8 % aufweist,
oder Blasformetikett nach Anspruch 1, wobei die Folie eine Zugfestigkeit von 31.000 bis 44.800 MPa (4500 bis 6500 psi) aufweist.

10. Spritzgegossene Verpackung, in welche das Blasformetikett nach Anspruch 1 integriert ist.

11. Blasgeformte Verpackung, in welche das Blasformetikett nach Anspruch 1 integriert ist.

12. Spritzstreckgeblasene Verpackung, in welche das Blasformetikett nach Anspruch 1 integriert ist.

13. Verfahren zur Herstellung eines Blasformetiketts nach einem der Ansprüche 1 bis 9 mit einem Schritt des Erzeugens der Gießfolie, wobei mindestens eine Gießwalze eine Solltemperatur von 96,1 °C (205 °F) aufweist.

## Revendications

1. Étiquette dans moule comprenant un film coulé comprenant une résine de polypropylène et un agent de nucléation, dans laquelle ladite résine de polypropylène a un indice de fluage de 2 dg/min à 10 dg/min, une teneur en matières solubles dans le xylène inférieure à 1 % en poids, et une distribution méso en pentad supérieure à 98 %, dans laquelle le film a un module sécant à 2 % de 1030 à 1720 MPa (150 à 250 kpsi).

2. Étiquette dans moule de la revendication 1 dans laquelle l'agent de nucléation est choisi dans le groupe constitué de sels d'acide carboxylique, talc, phosphates, hydrates de silicate métallique, sels d'acide norbornane-carboxylique, dérivés organiques de dibenzylidène sorbitol, sorbitol acétals, sels d'organophosphate et des combinaisons de ceux-ci.

3. Étiquette dans moule de la revendication 2 dans laquelle l'agent de nucléation est un sel d'acide norbornane-carboxylique.

4. Étiquette dans moule de la revendication 3 dans laquelle l'agent de nucléation comprend de 5 à 1000 ppm de la composition totale de la résine de polypropylène et de l'agent de nucléation.

5. Étiquette dans moule de la revendication 1 dans laquelle ladite résine de polypropylène est viscoréduite.

6. Étiquette dans moule de la revendication 1 dans laquelle le film a un trouble de 2 % to 8 %.

7. Étiquette dans moule de la revendication 1 dans laquelle le film a un brillant à 45° de 60 % à 90 %.

8. Étiquette dans moule de la revendication 1 dans laquelle le film a une épaisseur de 50,8 µm à 203 µm (2 mil à 8 mil).

9. Étiquette dans moule de la revendication 1 dans laquelle le film a un allongement au seuil d'écoulement de 2 % à 8% ;
ou étiquette dans moule de la revendication 1 dans laquelle le film a une résistance à la traction de 31000 à 44800 MPa (4500 à 6500 psi).

10. Emballage moulé par injection dans lequel l'étiquette dans moule de la revendication 1 est incorporée.

11. Emballage moulé par soufflage dans lequel l'étiquette dans moule de la revendication 1 est incorporée.

12. Emballage moulé par étirage-soufflage par injection dans lequel l'étiquette dans moule de la revendication 1 est incorporée.

13. Procédé de production d'une étiquette dans moule selon l'une quelconque des revendications 1 à 9 ayant une étape de production du film coulé dans laquelle au moins un rouleau de coulée a une température de de consigne de 96,1 °C (205 °F).
